# EUROPÄISCHE PATENTSCHRIFT

(11) **EP 4 504 571 B1**
(45) Veröffentlichungstag und Bekanntmachung des Hinweises auf die Patenterteilung: **16.09.2026**
(21) Anmeldenummer: 23704743.6
(22) Anmeldetag: 09.02.2023
(51) Int. Cl.: B60W 40/09, B60W 50/00, B60W 50/08, B60W 50/12

(54) **VERFAHREN UND STEUERGERÄT ZUM BETREIBEN EINES KRAFTRADS**
METHOD AND CONTROL DEVICE FOR OPERATING A MOTORCYCLE
PROCÉDÉ ET DISPOSITIF DE COMMANDE POUR LE FONCTIONNEMENT D'UNE MOTOCYCLETTE

(30) Priorität: 04.04.2022 DE 102022203318
(43) Veröffentlichungstag der Anmeldung: 12.02.2025
(73) Patentinhaber: Robert Bosch GmbH, 70442 Stuttgart (DE)
(72) Erfinder: BUSEMANN CAMPINA, Jasmin, 25488 Holm (DE); DIETZ, Lukas, 75038 Oberderdingen (DE); KRETSCHMER, Markus, 71636 Ludwigsburg (DE); WEIRAUCH, Chris, 71691 Freiberg Am Neckar (DE)
(86) Internationale Anmeldenummer: PCT/EP2023/053144
(87) Internationale Veröffentlichungsnummer: WO 2023/193979

(56) Entgegenhaltungen:
- DE-A1- 102018 214 349
- JP-A- H11 129 924
- US-A1- 2010 164 703
- US-A1- 2014 372 012

## Beschreibung

### Gebiet der Erfindung

Die Erfindung betrifft ein Verfahren zum Betreiben eines Kraftrads, sowie ein entsprechendes Steuergerät, Computerprogrammprodukt, und maschinenlesbares Speichermedium.

### Stand der Technik

Bei Krafträdern gibt ein Fahrer durch ein Verdrehen eines Fahrgriffs einen Fahrerwunsch ab. Der Fahrerwunsch wird in einem Fahrzeugsteuergerät des Kraftrads in ein Sollmoment für einen Antrieb des Kraftrads umgesetzt. Um einen ruckarmen Lauf des Antriebs zu ermöglichen, wird das Sollmoment unter Verwendung eines Fahrfilteralgorithmus geglättet. Der Fahrfilteralgorithmus kann das Sollmoment für unterschiedliche vorwählbare Fahrmodi des Kraftrads unterschiedlich stark glätten.

### Offenbarung der Erfindung

Vor diesem Hintergrund werden mit dem hier vorgestellten Ansatz ein Verfahren zum Betreiben eines Kraftrads, ein entsprechendes Steuergerät, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Bei dem hier vorgestellten Ansatz wird ein Fahrkönnen eines Fahrers eines Kraftrads aus aktuell am Kraftrad erfassten Werten ermittelt und ein Fahrfilteralgorithmus des Kraftrads abhängig von dem Fahrkönnen parametriert. Der Fahrfilteralgorithmus wird so fortlaufend an das Fahrkönnen angepasst. Dazu wird ausgenutzt, dass ein Zusammenhang zwischen dem Fahrkönnen, einem momentan über einen Fahrgriff beziehungsweise einen Gasgriff des Kraftrads erfassten Fahrerwunsch und einer momentanen Geschwindigkeit des Kraftrads besteht. Insbesondere wird dabei ausgewertet, wie schnell der Fahrer den Fahrerwunsch bei verschiedenen Geschwindigkeiten ändert, um das Fahrkönnen zu bewerten.

Durch den hier vorgestellten Ansatz kann ein Ansprechverhalten des Kraftrads auf den Fahrerwunsch an das Fahrkönnen des Fahrers angepasst werden. So kann verhindert werden, dass ein unerfahrener Fahrer überfordert wird. Ebenso kann verhindert werden, dass ein erfahrener Fahrer das Ansprechverhalten als zu träge empfindet. Das Ansprechverhalten kann mit steigendem Fahrkönnen spritziger werden.

Es wird ein Verfahren zum Betreiben eines Kraftrads gemäß Anspruch 1 vorgeschlagen.

Ideen zu Ausführungsformen der vorliegenden Erfindung können unter anderem als auf den nachfolgend beschriebenen Gedanken und Erkenntnissen beruhend angesehen werden.

Ein Kraftrad kann ein angetriebenes Zweirad sein. Das Kraftrad kann beispielsweise ein Motorrad, Mokick oder ein Motorroller sein. Das Kraftrad kann einen elektrischen Antrieb oder einen Verbrennungsmotor aufweisen. Ein Fahrerwunsch kann über einen Fahrgriff des Kraftrads eingelesen werden. Der Fahrgriff kann als Gasdrehgriff bezeichnet werden. Der Fahrerwunsch kann von einem Fahrer des Kraftrads abgegeben werden. Der Fahrerwunsch kann proportional zu einer Winkelstellung des Fahrgriffs sein. Ein Fahrfilteralgorithmus kann eine Übertragung des Fahrerwunschs in ein Motorsollmoment für den Antrieb beeinflussen. Der Fahrfilteralgorithmus kann unterschiedliche Fahrmodi aufweisen. Die Fahrmodi können durch den Fahrer vorgewählt werden. Der Fahrfilteralgorithmus kann das Motorsollmoment insbesondere glätten. Der Fahrfilteralgorithmus kann während des Betriebs des Kraftrads unter Verwendung des Erfahrungswerts parametriert werden. Insbesondere können die verschiedenen Fahrmodi unter Verwendung des Erfahrungswerts parametriert werden. Der Erfahrungswert kann beeinflussen, wie schnell eine Änderung des Fahrerwunschs als Änderung des Sollmoments abgebildet wird. Der Erfahrungswert kann ein Zahlenwert sein.

Eine Änderungsgeschwindigkeit des Fahrerwunschs kann aus dem Fahrerwunsch abgeleitet werden. Die Änderungsgeschwindigkeit repräsentiert, wie schnell sich der Fahrerwunsch ändert. Erfindungsgemäß bildet die Änderungsgeschwindigkeit eine Winkelgeschwindigkeit des Fahrgriffs ab. Eine Geschwindigkeit des Kraftrads kann über einen Geschwindigkeitssensor des Kraftrads erfasst werden. Die Änderungsgeschwindigkeit und die Geschwindigkeit können einen momentanen Fahrzustand des Kraftrads abbilden.

Die Änderungsgeschwindigkeit und die Geschwindigkeit können über einen gleitenden Beobachtungszeitraum ausgewertet werden. Während eine aktuelle Änderungsgeschwindigkeit und eine aktuelle Geschwindigkeit eingelesen werden und zum Ermitteln des Erfahrungswerts herangezogen werden, können eine um den Beobachtungszeitraum früher eingelesene Änderungsgeschwindigkeit und eine um den Beobachtungszeitraum früher eingelesene Geschwindigkeit für die Ermittlung nicht mehr verwendet werden. Der Beobachtungszeitraum kann beispielsweise zwischen 15 Minuten und 30 Minuten liegen. Die Änderungsgeschwindigkeit und die Geschwindigkeit können nur innerhalb einer vorbestimmten Zeitspanne ausgewertet werden. Nach Ablauf der Zeitspanne können Werte der Änderungsgeschwindigkeit und der Geschwindigkeit gelöscht werden. Der Beobachtungszeitraum kann gezählt werden, während das Kraftrad betrieben wird. Wenn das Kraftrad abgestellt ist, kann die Zeit nicht weiter gezählt werden. Dadurch kann sich der Erfahrungswert zeitnah ändern, wenn der Fahrer an Fahrkönnen hinzugewinnt. Wenn der Fahrer Fahrkönnen verliert, kann sich der Erfahrungswert ebenso ändern. Der Beobachtungszeitraum kann auch als Betrachtungszeitraum bezeichnet werden. Der Beobachtungszeitraum kann alternativ in Abhängigkeit von der gefahrenen Strecke definiert sein.

Beispielsweise kann nach fünf Kilometern gefahrener Strecke eine erste Aktualisierung der Ermittlung des Fahrkönnens durchgeführt werden.

Fahrzustände aus der Änderungsgeschwindigkeit und der Geschwindigkeit können in einem Diagramm abgelegt werden und eine durch die Fahrzustände belegte Fläche des Diagramms ausgewertet werden, um den Erfahrungswert zu erhalten. Ein Fahrzustand kann ein Datenpunkt sein. Der Fahrzustand kann durch ein Wertepaar aus einem zu einem bestimmten Zeitpunkt erfassten Änderungsgeschwindigkeitswert der Betätigung des Gas- oder Fahrgriffes und einem zu dem Zeitpunkt erfassten Geschwindigkeitswert repräsentiert werden. Ein Diagramm kann auf einer Achse einen Änderungsgeschwindigkeitsbereich der Änderungsgeschwindigkeit und auf der anderen Achse einen Geschwindigkeitsbereich der Geschwindigkeit angetragen haben. Durch das Ablegen beziehungsweise Eintragen einer Vielzahl von Fahrzuständen in das Diagramm kann eine Punktewolke aus Fahrzuständen entstehen. Im Diagramm kann die Vielzahl der Fahrzustände grafisch dargestellt werden. Die Punktewolke kann eine Fläche des Diagramms zumindest anteilig bedecken. Zum Bestimmen der bedeckten Fläche kann beispielsweise eine Hüllkurve um die Punktewolke gezogen werden. Wenn mehrere Fahrzustände mit ähnlichen Änderungsgeschwindigkeitswerten und Geschwindigkeitswerten im Diagramm abgelegt werden, kann die Punktewolke im Bereich dieser Werte eine erhöhte Punktdichte aufweisen.

Das Diagramm kann in Felder gerastert sein. Die Fahrzustände können in den Feldern abgelegt werden. Dabei kann eine Fläche der Felder mit abgelegten Fahrzuständen ausgewertet werden, um den Erfahrungswert zu erhalten. Ein Feld kann einen Änderungsgeschwindigkeitsteilbereich und einen Geschwindigkeitsteilbereich des Diagramms abdecken. Alle Felder zusammen können den vollständigen Änderungsgeschwindigkeitsbereich und den vollständigen Geschwindigkeitsbereich des Diagramms abdecken. Die Felder können gleich groß oder unterschiedlich groß sein. Wenn ein Fahrzustand innerhalb des Änderungsgeschwindigkeitsteilbereichs und des Geschwindigkeitsteilbereichs eines Felds liegt, wird er dem Feld zugeordnet. Wo der Fahrzustand innerhalb des Felds liegt, ist dabei egal. Durch ein Rastern des Diagramms kann eine verwendete Datenmenge reduziert werden. Zusätzlich ist keine Hüllkurve erforderlich, um die Fläche bestimmen, da jedem Feld ein Flächenwert zugeordnet ist. Flächenwerte von belegten Feldern können einfach addiert werden. Wenn eine vorbestimmbare Mindestanzahl Fahrzuständen in dem Feld abgelegt ist, kann das Feld als belegt gezählt werden. Die Mindestanzahl kann beispielsweise zwischen fünf und eins liegen.

Ein Flächenträgheitsmoment der Fläche kann ausgewertet werden, um den Erfahrungswert zu erhalten. Eine große Fläche kann ein größeres Flächenträgheitsmoment aufweisen als eine kleine Fläche. Ein unerfahrener Fahrer weist noch wenig Routine auf und reagiert auf ähnliche Situationen jeweils unterschiedlich. Der unerfahrene Fahrer kann daher über einen großen Wertebereich verstreute Fahrzustände erzeugen. Ein erfahrener Fahrer hat viel Routine und reagiert meist ähnlich auf ähnliche Situationen. Der erfahrene Fahrer kann die gleiche Anzahl Fahrzustände innerhalb eines wesentlich kleineren Wertebereichs erzeugen als der unerfahrene Fahrer.

Der Erfahrungswert kann ferner unter Verwendung eines Werts des Fahrerwunschs ermittelt werden. Der Wert des Fahrerwunschs kann ein momentaner Absolutwert des Fahrerwunschs sein. Der Wert kann ähnlich verarbeitet werden wie die Änderungsgeschwindigkeit. Der Wert kann in ein Verhältnis zur Geschwindigkeit gesetzt werden. Auch am Absolutwert des Fahrerwunschs kann die Erfahrung des Fahrers erkannt werden.

Das Verfahren ist vorzugsweise computerimplementiert und kann beispielsweise in Software oder Hardware oder in einer Mischform aus Software und Hardware beispielsweise in einem Steuergerät implementiert sein.

Der hier vorgestellte Ansatz schafft ferner ein Steuergerät, das dazu ausgebildet ist, um die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügte Zeichnungen beschrieben, wobei weder die Zeichnungen noch die Beschreibung als die Erfindung einschränkend auszulegen sind.
Fig. 1 zeigt eine Darstellung eines Kraftrads mit einem Steuergerät gemäß einem Ausführungsbeispiel;
Fig. 2 zeigt für verschiedene Fahrer Darstellungen von kumulierten Fahrzuständen gemäß einem Ausführungsbeispiel;
Fig. 3 zeigt Darstellungen von unterschiedlichen Flächenträgheitsmomenten von Verteilungen von Fahrzuständen gemäß einem Ausführungsbeispiel; und
Fig. 4 zeigt eine Darstellung von Verläufen unterschiedlich gefilterter Motorsollmomente gemäß einem Ausführungsbeispiel.

Die Figuren sind lediglich schematisch und nicht maßstabsgetreu. Gleiche Bezugszeichen bezeichnen gleiche oder gleichwirkende Merkmale.

### Ausführungsformen der Erfindung

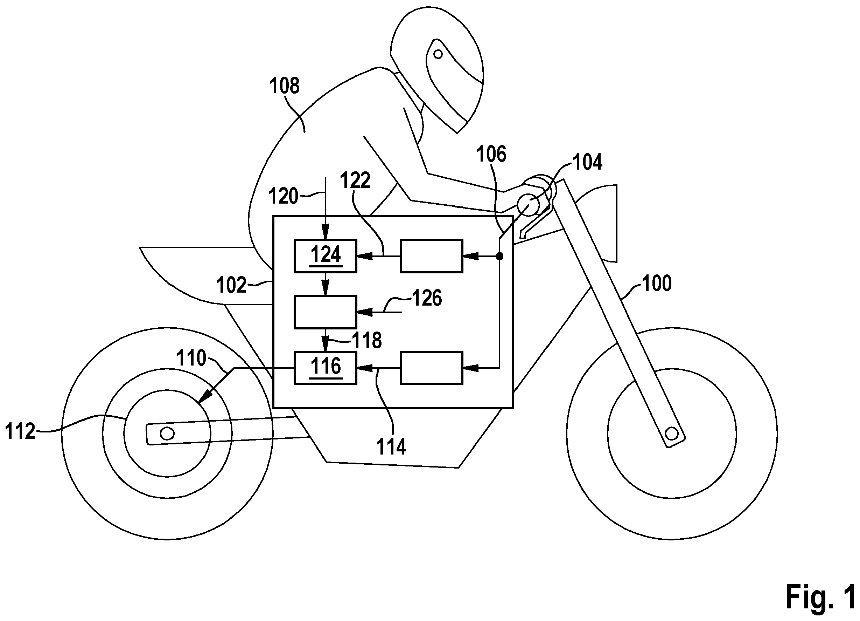

Fig. 1 zeigt eine Darstellung eines Kraftrads 100 mit einem Steuergerät 102 gemäß einem Ausführungsbeispiel. Das Steuergerät 102 ist dazu ausgebildet, einen über einen Fahrgriff 104 des Kraftrads 100 eingelesenen Fahrerwunsch 106 eines Fahrers 108 des Kraftrads 100 unter Berücksichtigung eines Fahrkönnens des Fahrers 108 in ein Motorsollmoment 110 für einen Antrieb 112 des Kraftrads 100 zu übertragen.

Der Fahrerwunsch 106 wird aus einer Winkelstellung des Fahrgriffs 104 abgeleitet. Der Fahrerwunsch 106 entspricht einem ungefilterten Sollmoment 114 für den Antrieb 112. Das ungefilterte Sollmoment 114 wird durch einen parametrierbaren Fahrfilteralgorithmus 116 des Steuergeräts 102 in das gefilterte Motorsollmoment 110 umgesetzt. Durch die Parametrierung wird insbesondere definiert, wie schnell das gefilterte Motorsollmoment 110 an Änderungen des ungefilterten Sollmoments 114 angepasst wird. Der Fahrfilteralgorithmus 116 glättet also das ungefilterte Sollmoment 114, um das gefilterte Motorsollmoment 110 zu erhalten.

Der Fahrfilteralgorithmus 116 wird zumindest durch einen Erfahrungswert 118 parametriert. Der Erfahrungswert 118 bildet das Fahrkönnen des Fahrers 108 in einem Zahlenwert ab.

Der Erfahrungswert 118 wird unter Verwendung des Fahrerwunschs 106 und einer Geschwindigkeit 120 des Kraftrads 100 ermittelt. Zum Ermitteln des Erfahrungswerts 118 wird eine Änderungsgeschwindigkeit 122 des Fahrerwunschs 106 aus dem Fahrerwunsch 106 abgeleitet.

Die momentane Änderungsgeschwindigkeit 122 und die momentane Geschwindigkeit 120 werden korreliert, um den Erfahrungswert 118 zu ermitteln. Die momentane Änderungsgeschwindigkeit 122 und die momentane Geschwindigkeit 120 bilden dabei einen momentanen Fahrzustand 124 ab. Zum Ermitteln des Erfahrungswerts 118 werden Fahrzustände 124 über einen Beobachtungszeitraum 126 kumuliert und die kumulierten Fahrzustände 124 ausgewertet.

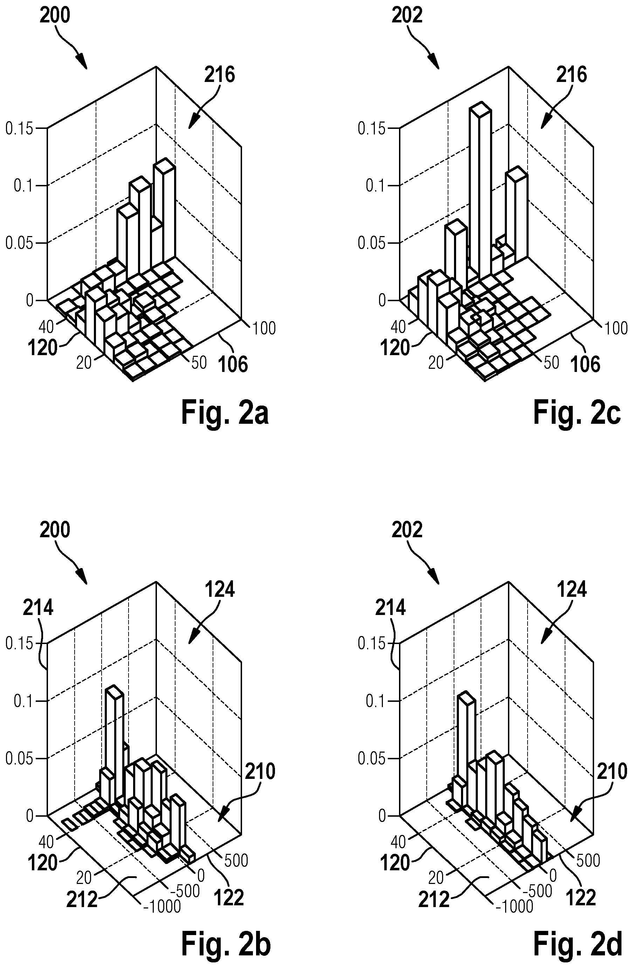

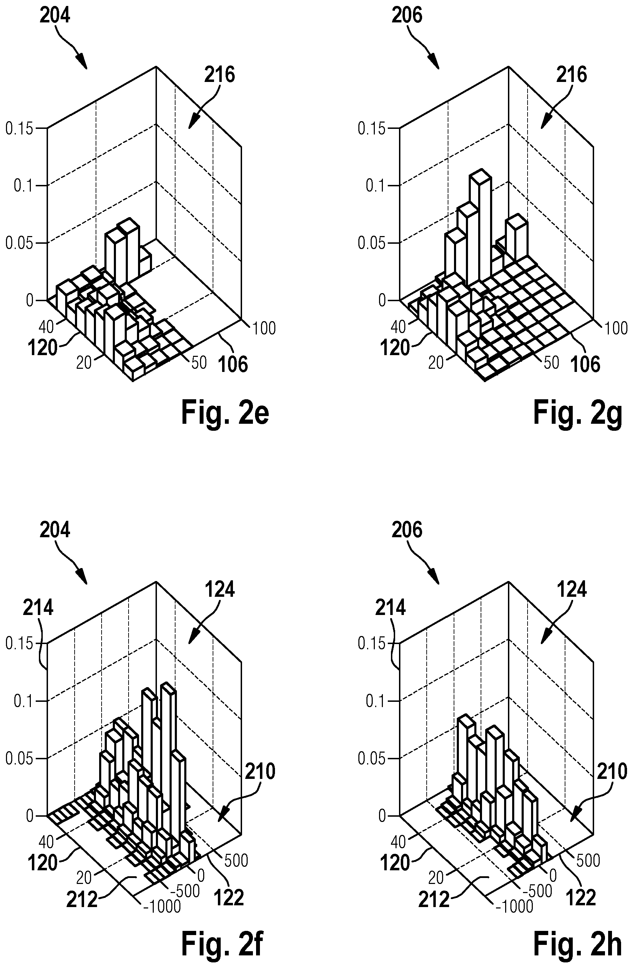

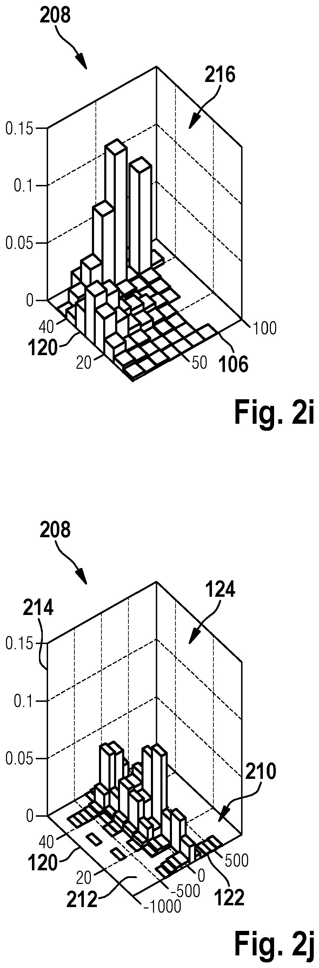

Fig. 2 zeigt Darstellungen von kumulierten Fahrzuständen 124 verschiedener Fahrer 200, 202, 204, 206, 208 eines Kraftrads. Die Fahrzustände 124 sind auf identischer Strecke mit demselben Kraftrad erfasst worden. Ein Fahrzustand 124 repräsentiert jeweils eine momentane Änderungsgeschwindigkeit 122 eines Fahrerwunschs 106 des jeweiligen Fahrers und eine momentane Geschwindigkeit 120 des Kraftrads. Die Fahrzustände 124 sind für jeden Fahrer 200, 202, 204, 206, 208 in einem eigenen Diagramm dargestellt. Die Diagramme haben jeweils an der Abszisse die Änderungsgeschwindigkeit 122 und an der Ordinate die Geschwindigkeit 120 angetragen.

Der erste Fahrer 200 hat einen Motorradführerschein und keine aktuelle Fahrerfahrung. Der zweite Fahrer 202 ist ein erfahrener Motorradfahrer. Der dritte Fahrer 204 ist ein Fahranfänger. Der vierte Fahrer 206 ist ein erfahrener Motorradfahrer. Der fünfte Fahrer ist 208 ein Fahranfänger. Die Fahrer 200, 202, 204, 206, 208 weisen also jeweils unterschiedliche Fahrkönnen beziehungsweise unterschiedliche Fahrerfahrungen auf.

Die Fahrzustände 124 der verschiedenen Fahrer 200, 202, 204, 206, 208 sind je nach Fahrkönnen unterschiedlich über die Diagramme verteilt. Eine Verteilung der Fahrzustände 124 bildet also das Fahrkönnen der Fahrer 200, 202, 204, 206, 208 ab.

Bei dem hier vorgestellten Ansatz wird eine durch die Fahrzustände 124 belegte Fläche 210 des Diagramms verwendet, um einen individuellen Erfahrungswert zu ermitteln.

Dabei korreliert eine Ausdehnung der Fläche 210 mit dem Fahrkönnen. Je kleiner die Fläche 210 ist, umso größer ist das Fahrkönnen.

Die Größe der Fläche 210 kann beispielsweise durch eine Hüllkurve um die Fahrzustände 124 bestimmt werden.

In der Darstellung sind die Diagramme in Felder 212 gerastert. Dabei sind jedem Feld ein Wertebereich der Änderungsgeschwindigkeit 122 und ein Wertebereich der Geschwindigkeit 120 zugeordnet. Jedes Feld 212 umfasst also einen Flächenanteil einer Gesamtfläche des Diagramms. Die Fahrzustände 124 sind pro Feld 212 kumuliert dargestellt. Wenn zumindest ein Fahrzustand 124 innerhalb eines Felds 212 liegt, ist das Feld 212 belegt und der Flächenanteil des Felds 212 wird zur Fläche 210 hinzugezählt.

Alternativ kann ein Feld 212 auch erst als belegt dargestellt werden, wenn eine vordefinierte Mindestanzahl von Fahrzuständen 124 innerhalb des Felds 212 liegt.

In einem Ausführungsbeispiel werden die Fahrzustände 124 nach einem vorbestimmten Betrachtungszeitraum wieder gelöscht. Alternativ kann der älteste Fahrzustand 124 beim Überschreiten einer maximalen Anzahl von Fahrzuständen 124 pro Diagramm gelöscht werden. Beispielsweise wird der älteste Fahrzustand 124 gelöscht, wenn z.B. 2 Byte (2¹² = 65536) oder drei Byte (2²⁴ = 16777216) an Fahrzuständen 124 im Diagramm kumuliert sind. Die Fahrzustände können auch nach einer vorgestimmten Betriebsdauer des Kraftrads gelöscht werden. Dadurch kann sich die Verteilung der Fahrzustände im Diagramm über die Zeit verändern. Die Veränderung der Verteilung bildet damit eine Veränderung des Fahrkönnens ab. Die Veränderung des Fahrkönnens wird auch in einer Änderung des Erfahrungswerts abgebildet.

In einem Ausführungsbeispiel ist in den Diagrammen zusätzlich eine Häufigkeit 214 der innerhalb eines Felds 212 liegenden Fahrzustände 124 dargestellt. Die Summe aller Häufigkeiten 214 ergibt dabei 100% oder eins. Auch die Häufigkeit 214 der Fahrzustände 124 kann zum Ermitteln des Fahrkönnens verwendet werden.

In einem Ausführungsbeispiel ist jedem Fahrer 200, 202, 204, 206, 208 ein weiteres Diagramm zugeordnet. In den weiteren Diagrammen ist der Fahrerwunsch 106 über die Geschwindigkeit 120 aufgetragen. Auch in diesen Diagrammen sind Fahrzustände 216 aus einem momentanen Fahrerwunsch 106 und der momentanen Geschwindigkeit 120 dargestellt. Auch die Verteilung der Fahrzustände 216 kann zum Ermitteln des jeweiligen Erfahrungswerts verwendet werden.

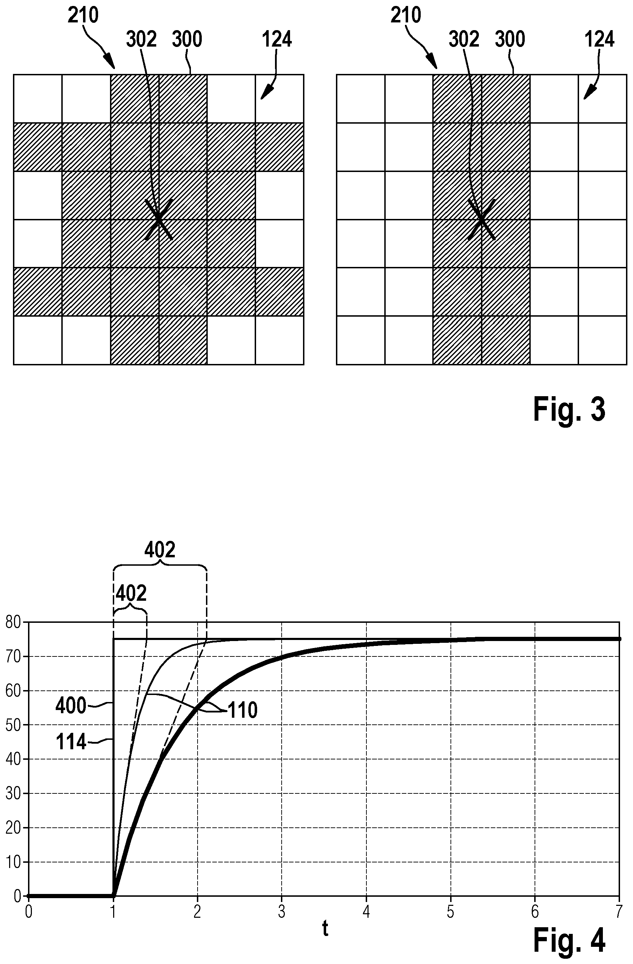

Fig. 3 zeigt Darstellungen von unterschiedlichen Flächenträgheitsmomenten 300 von Verteilungen von Fahrzuständen 124 gemäß einem Ausführungsbeispiel. Die Fahrzustände 124 belegen wie in Fig. 2 unterschiedliche Flächen 210 von zwei Diagrammen. Je unerfahrener ein Fahrer ist, umso stärker sind die Fahrzustände 124 über das ihm zugeordnete Diagramm verteilt.

Hier sind in einem Diagramm Fahrzustände 124 eines unerfahrenen Fahrers dargestellt, während im anderen Diagramm Fahrzustände 124 eines erfahrenen Fahrers dargestellt sind. Die Fahrzustände des unerfahrenen Fahrers sind über eine wesentlich größere Fläche 210 verteilt als die Fahrzustände 124 des erfahrenen Fahrers.

Eine geeignete Kennzahl zum Bewerten der Flächen 210 ist das Flächenträgheitsmoment 300 der Flächen 210. Das Flächenträgheitsmoment 300 ist umso größer, je weiter die Fahrzustände 124 über das Diagramm verteilt sind. Damit ist das Flächenträgheitsmoment 300 umso größer, je unerfahrener der Fahrer ist. Der Erfahrungswert wird in einem Ausführungsbeispiel unter Verwendung des Flächenträgheitsmoments 300 der Verteilung der Fahrzustände 124 ermittelt.

Fig. 4 zeigt eine Darstellung von Verläufen unterschiedlich gefilterter Motorsollmomente 110 gemäß einem Ausführungsbeispiel. Die Motorsollmomente 110 werden unter Verwendung von unterschiedlich parametrierten Fahrfilteralgorithmen aus einem ungefilterten Sollmoment 114 gefiltert. Die Verläufe sind in einem Diagramm dargestellt, das auf der Abszisse die Zeit und auf der Ordinate ein Drehmoment angetragen hat.

Das ungefilterte Sollmoment 114 ist hier als Sprung 400 von einem niedrigen Drehmoment auf ein hohes Drehmoment dargestellt. Die Motorsollmomente 110 sind als Sprungantwort der unterschiedlich parametrierten Fahrfilteralgorithmen dargestellt. Der Sprung 400 ist dabei eine in der Realität nahezu unmögliche sprunghafte Änderung des Sollmoments 114 auf.

Die Motorsollmomente 110 folgen dem Sprung 400 mit einer erfahrungsabhängigen Steigung und nähern sich dann näherungsweise asymptotisch an das hohe Drehmoment an. Dadurch erreichen die gefilterten Motorsollmomente 110 das hohe Drehmoment erst mit einer erfahrungsabhängigen Verzögerung 402. Die Verzögerung 402 ist dabei abhängig von dem auf dem Fahrkönnen des jeweiligen Fahrers basierenden Erfahrungswert. Je erfahrener der Fahrer ist, umso geringer ist die Verzögerung. Eine Fahrerwunschannahme erfolgt bei dem hier vorgestellten Ansatz als abhängig von dem Erfahrungswert.

Mit anderen Worten wird eine Fahrerklassifizierung zum Einstellen einer Fahrzeugdynamik vorgestellt.

Elektrische Roller werden seit einiger Zeit immer populärer. Dies gilt insbesondere für die Märkte in China, Indien und ASEAN sowie in zunehmendem Maße auch für Europa. Bei Jugendlichen und jungen Erwachsenen sind besonders Roller der Klassen L1e (bis 4 kW, <= 45 km/h) und L3e (bis 11 kW) sehr populär. Für Fahranfänger sind die bereits angesprochenen Elektroroller ein geeigneter Einstieg in die individuelle Mobilität, da das Fahren mit ihnen sehr einfach zu erlernen ist.

Bei Elektrorollern und auch bei konventionellen Rollern, Mofas oder Motorrädern wird durch das Verdrehen des Gasdrehgriffs an der rechten Lenkerseite ein sogenannter Fahrerwunsch erzeugt, welcher im Fahrzeugsteuergerät in Antriebsbefehle für den Elektro- oder Verbrennungsmotor umgesetzt wird. Der Fahrerwunsch wird üblicherweise als Motorsolldrehmoment interpretiert. Da das Verdrehen des Gasdrehgriffs in den wenigsten Fällen sanft und ruckfrei geschieht, wird nach der Ermittlung des Fahrerwunsches (=Motorsolldrehmoment) üblicherweise ein Fahrfilteralgorithmus auf das Motorsolldrehmoment aufgeschaltet, damit etwaige "Ruckspitzen" des Motorsolldrehmoments abgeschwächt (=gefiltert) werden, um ein möglichst ruckfreies Fahren zu ermöglichen. Dieser Fahrfilteralgorithmus kann spezifisch für verschiedene, im Fahrzeug verfügbare Fahrmodi parametriert werden. Ein Elektroroller kann beispielsweise drei Fahrmodi (z.B. Eco, Cruise, Sport) haben. Für jeden der Fahrmodi gibt es also einen spezifisch parametrierten Fahrfilteralgorithmus.

Fahranfänger können große Schwierigkeiten haben, sich auf die Dynamik von Motorrädern und insbesondere auf die schnelle und sofort verfügbare Dynamik von Elektrorollern einzustellen, was sich in einem unsicheren und damit u. U. gefährlichen Fahren zeigt.

Bei dem hier vorgestellten Ansatz wird der Fahrer oder die Fahrerin hinsichtlich der Erfahrung mit einem Zweirad durch eine Analyse des Fahrerverhaltens kategorisiert. In Abhängigkeit der jeweiligen Kategorie wird der oben beschriebene Fahrfilteralgorithmus dahingehend angepasst, dass z.B. bei einem Fahranfänger ein sehr sanftes Beschleunigen des Fahrzeugs angestrebt wird, bei einem sehr erfahrenen Fahrer hingegen ein sportliches Fahren möglich ist. Diese Anpassungen des Fahrfilteralgorithmus finden während des Fahrbetriebs statt, so dass bei einer längeren Fahrt und einer damit wachsenden Erfahrung, der Fahrfilteralgorithmus kontinuierlich angepasst werden kann.

Insbesondere wird hier die Fahrerkategorisierung unter Verwendung eines Verdrehwinkels des Gasdrehgriffs, einer Verdrehwinkelgeschwindigkeit des Gasdrehgriffs (=zeitliche Ableitung des Verdrehwinkels) und einer Fahrzeuggeschwindigkeit durchgeführt.

In Fig. 2 sind die Auftretenshäufigkeiten des Verdrehwinkels und der Fahrzeuggeschwindigkeit bzw. der Verdrehwinkelgeschwindigkeit und der Fahrzeuggeschwindigkeit für fünf verschiedene Fahrer und Fahrerinnen dargestellt, die alle den identischen Rundkurs mit dem identischen Elektroroller gefahren sind. Fahrer drei und Fahrer fünf sind Fahranfänger, Fahrer eins hat einen Motorradführerschein, ist aber seit längerem nicht mehr Motorrad bzw. Roller gefahren, Fahrer zwei und vier sind erfahrene Motorradfahrer.

Während des Fahrbetriebs werden der Verdrehwinkel des Gasgriffs, die Verdrehwinkelgeschwindigkeit, die Fahrzeuggeschwindigkeit, die Bremsenbetätigung und ein Zähler kontinuierlich ausgewertet und in verschiedene Raster aufgeteilt. Z.B. ist in Fig. 2 zu sehen, dass die Geschwindigkeit in Raster von 0 bis 50 km/h (in Schritten von 5 km/h eingeteilt ist. Für den Verdrehwinkel ist das Raster 10 % bis 100 % in Schritten von 10 %, für die Verdrehwinkelgeschwindigkeit ist es ein Bereich von minus 1000%/s bis plus 1000%/s in einem Raster von 100%/s. Während des Fahrens werden die hier beschriebenen Raster mit den aktuellen Fahrdaten befüllt und ergeben ein charakteristisches "Gebirge", welches ähnlich wie ein Fingerabdruck die Erfahrung des Fahrers beschreibt.

Die Raster der erfahrenen Fahrer zwei und vier zeigen ein sehr steiles Gebirge mit einem sehr schmalen Gebirgsfuß, die Fahranfänger drei und fünf zeigen hingegen ein sehr "verstreutes" Raster und der Fahrer eins liegt dazwischen. Daraus kann eine Kategorisierung abgeleitet werden. Die Fahranfänger erhalten als Wertigkeit "drei", der Durchschnittliche Fahrer erhält als Wertigkeit "zwei" und die erfahrenen Fahrer ("pro") erhalten als Wertigkeit "eins".

Mit Hilfe der Wertigkeit bzw. der Kategorisierung kann nun der Fahrfilteralgorithmus kontinuierlich variiert werden. Die Stützstellen drei, zwei und eins werden im realen Fahrbetrieb nur als Stützstellen betrachtet, denn die "Rasteranalyse" gemäß der Darstellung in Fig. 2 wird mit großer Wahrscheinlichkeit nie exakt einen Anfänger, Durchschnittsfahrer oder Pro kategorisieren.

Es kann also basierend auf der Fahrerkategorisierung linear interpoliert werden. Die "eins" bei Pro bedeutet, dass der vordefinierte Fahrfilteralgorithmus verwendet wird. Eine "zwei" bedeutet, dass die Filterzeit des Fahrfilteralgorithmus verdoppelt wird. Bei einer "drei" wird diese Zeit also verdreifacht. Ist z.B. die vordefinierte Filterzeit des Fahrfilteralgorithmus zu 0,25 Sekunden parametrisiert, bedeutet dies, dass nach ca. einer Sekunde das vom Fahrer gewünschte Motorsolldrehmoment in ein gefiltertes Motorsolldrehmoment übersetzt wurde. Wird nun der Fahrer als Anfänger mit der Kategorisierung "drei" erkannt, erreicht das Motorsolldrehmoment erst nach drei Sekunden den gewünschten Zielwert. Mit dieser langsameren Systemreaktion (=langsameres Beschleunigungsvermögen) wird ein dem Fahrerkönnen angepasstes Fahrverhalten des Elektrorollers/Mofas/Motorrads erreicht.

Die eigentliche Kategorisierung wird anhand der genutzten (oder befüllten) Rasterfläche aus Fig. 2 getätigt. Je kleiner die Fläche und je kleiner das Flächenträgheitsmoment, desto erfahrener ist der Fahrer.

In Fig. 3 ist diese Kategorisierung beispielhaft dargestellt. Beide Darstellungen in Fig. 3 zeigen den identischen Flächenschwerpunkt als rotes X. Im Fall des Anfängers ist die Fläche der genutzten Raster von Fahrzeuggeschwindigkeit und Gasgriffverdrehwinkelgeschwindigkeit (Throttle gradient) deutlich größer als beim Profi. Zusätzlich ist die genutzte Rasterfläche beim Anfänger auch deutlich weiter verteilt, was zu einem signifikant größeren Flächenträgheitsmoment (="Flächenverteilung") führt.

Die hier vorgestellte Funktion kann unabhängig vom Antriebskonzept in allen Mofas, Rollern, Mokicks oder Motorrädern angewendet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Kraftrads (100), wobei unter Verwendung einer Änderungsgeschwindigkeit (122) eines Fahrerwunschs (106) eines Fahrers (108) des Kraftrads (100) und einer Geschwindigkeit (120) des Kraftrads (100) ein Erfahrungswert (118) ermittelt wird, der ein Fahrkönnen des Fahrers (108) abbildet, wobei ein Fahrfilteralgorithmus (116) zum Übertragen des Fahrerwunschs (106) in ein Motorsollmoment (110) für einen Antrieb (112) des Kraftrads (100) unter Verwendung des ermittelten Erfahrungswerts (118) parametriert wird, **dadurch gekennzeichnet, dass** die Änderungsgeschwindigkeit (122) eine Winkelgeschwindigkeit eines Gasdrehgriffs abbildet.

2. Verfahren gemäß Anspruch 1, bei dem die Änderungsgeschwindigkeit (122) und die Geschwindigkeit (120) über einen gleitenden Beobachtungszeitraum (126) ausgewertet werden.

3. Verfahren gemäß einem der vorhergehenden Ansprüche, bei dem Fahrzustände (124) aus der Änderungsgeschwindigkeit (122) und der Geschwindigkeit (120) in einem Diagramm abgelegt werden und eine durch die Fahrzustände (124) belegte Fläche (210) des Diagramms ausgewertet wird, um den Erfahrungswert (118) zu erhalten.

4. Verfahren gemäß Anspruch 3, bei dem das Diagramm in Felder (212) gerastert ist und die Fahrzustände (124) in den Feldern (212) abgelegt werden, wobei eine Fläche (210) der Felder (212) mit abgelegten Fahrzuständen (124) ausgewertet wird, um den Erfahrungswert (118) zu erhalten.

5. Verfahren gemäß einem der Ansprüche 3 bis 4, bei dem ein Flächenträgheitsmoment (300) der Fläche (210) ausgewertet wird, um den Erfahrungswert (118) zu erhalten.

6. Verfahren gemäß einem der vorhergehenden Ansprüche, bei dem der Erfahrungswert (118) ferner unter Verwendung eines Werts des Fahrerwunschs (106) ermittelt wird.

7. Steuergerät (102) zum Betreiben eines Kraftrads (100), wobei das Steuergerät (102) dazu ausgebildet ist, das Verfahren gemäß einem der vorhergehenden Ansprüche in entsprechenden Einrichtungen auszuführen, umzusetzen und/oder anzusteuern.

8. Computerprogrammprodukt, das dazu eingerichtet ist, einen Prozessor bei Ausführung des Computerprogrammprodukts dazu anzuleiten, das Verfahren gemäß einem der Ansprüche 1 bis 6 auszuführen, umzusetzen und/oder anzusteuern.

9. Maschinenlesbares Speichermedium, auf dem das Computerprogrammprodukt gemäß Anspruch 8 gespeichert ist.

## Claims

1. Method for operating a motorcycle (100), wherein, using a rate of change (122) of a rider's request (106) of a rider (108) of the motorcycle (100) and a speed (120) of the motorcycle (100), an empirical value (118) is determined, which represents a riding ability of the rider (108), wherein a driving filter algorithm (116) for converting the rider's request (106) into a motor target torque (110) for a drive (112) of the motorcycle (100) is parameterized using the determined empirical value (118), **characterized in that** the rate of change (122) represents an angular speed of a throttle twist gip.

2. Method according to Claim 1, in which the rate of change (122) and the speed (120) are evaluated over a moving observation period (126).

3. Method according to either of the preceding claims, in which driving states (124) from the rate of change (122) and the speed (120) are stored in a diagram and an area (210) of the diagram occupied by the driving states (124) is evaluated in order to obtain the empirical value (118).

4. Method according to Claim 3, in which the diagram is divided into a grid of fields (212) and the driving states (124) are stored in the fields (212), wherein an area (210) of the fields (212) with stored driving states (124) is evaluated in order to obtain the empirical value (118).

5. Method according to either of Claims 3 and 4, in which an area moment of inertia (300) of the area (210) is evaluated in order to obtain the empirical value (118).

6. Method according to any of the preceding claims, in which the empirical value (118) is further determined using a value of the rider's request (106).

7. Controller (102) for operating a motorcycle (100), wherein the controller (102) is designed to execute, implement and/or activate the method according to any of the preceding claims in corresponding devices.

8. Computer program product which is configured to instruct a processor to execute, implement and/or activate the method according to any of Claims 1 to 6 when executing the computer program product.

9. Machine-readable storage medium, on which the computer program product according to Claim 8 is stored.

## Revendications

1. Procédé pour faire fonctionner une motocyclette (100), une valeur empirique (118), qui reproduit une compétence de conduite du conducteur (108), étant déterminée en utilisant une vitesse de changement (122) d'un souhait (106) de conducteur d'un conducteur (108) de la motocyclette (100) et une vitesse (120) de la motocyclette (100), un algorithme de filtre de conduite (116) étant paramétré pour transférer le souhait (106) de conducteur en un couple de consigne de moteur (110) pour un entraînement (112) de la motocyclette (100) en utilisant la valeur empirique (118) déterminée, **caractérisé en ce que** la vitesse de changement (122) reproduit une vitesse angulaire d'une poignée d'accélérateur.

2. Procédé selon la revendication 1, dans lequel la vitesse de changement (122) et la vitesse (120) sont évaluées sur une période d'observation glissante (126).

3. Procédé selon l'une des revendications précédentes, dans lequel des états de conduite (124) à partir de la vitesse de changement (122) et de la vitesse (120) sont enregistrés dans un diagramme et une zone (210) du diagramme occupée par les états de conduite (124) est évaluée pour obtenir la valeur empirique (118).

4. Procédé selon la revendication 3, dans lequel le diagramme est tramé dans des champs (212) et les états de conduite (124) sont enregistrés dans les champs (212), une zone (210) des champs (212) avec des états de conduite (124) enregistrés étant évaluée pour obtenir la valeur empirique (118).

5. Procédé selon l'une des revendications 3 à 4, dans lequel un couple d'inertie superficielle (300) de la surface (210) est évalué pour obtenir la valeur empirique (118).

6. Procédé selon l'une des revendications précédentes, dans lequel la valeur empirique (118) est déterminée en outre en utilisant une valeur du souhait (106) de conducteur.

7. Appareil de commande (102) pour faire fonctionner une motocyclette (100), l'appareil de commande (102) étant conçu pour exécuter, mettre en œuvre et/ou commander le procédé selon l'une des revendications précédentes dans des dispositifs correspondants.

8. Produit de programme d'ordinateur adapté pour, lors de l'exécution du produit de programme d'ordinateur, guider un processeur pour exécuter, mettre en œuvre et/ou commander le procédé selon l'une des revendications 1 à 6.

9. Support de stockage lisible par machine sur lequel est mémorisé le produit de programme d'ordinateur selon la revendication 8.
